# EUROPEAN PATENT SPECIFICATION

(11) **EP 4 726 227 B1**
(45) Date of publication and mention of the grant of the patent: **28.10.2026**
(21) Application number: 25194350.2
(22) Date of filing: 06.08.2025
(51) Int. Cl.: F16C 11/04, F16C 19/54, F16C 35/06, B25J 9/04, B25J 17/00

(54) **ARTICULATED ASSEMBLY, MECHANICAL JOINT AND ROBOT**
GELENKANORDNUNG, MECHANISCHES GELENK UND ROBOTER
ENSEMBLE ARTICULÉ, ARTICULATION MÉCANIQUE ET ROBOT

(30) Priority: 08.10.2024 CN 202411394527
(43) Date of publication of application: 15.04.2026
(73) Proprietor: BEIJING YOUZHUJU NETWORK TECHNOLOGY CO. LTD., Beijing 101299 (CN)
(72) Inventor: LIU, Yunfei, Beijing, 100028 (CN)
(74) Representative: Grünecker Patent- und Rechtsanwälte PartG mbB

(56) References cited:
- EP-A2- 0 362 848
- FR-A1- 3 115 011

## Description

The present application claims priority of Chinese Patent Application No. 202411394527.7, filed on October 08, 2024.

### TECHNICAL FIELD

Embodiments of the present disclosure relate to an articulated assembly, a mechanical joint, and a robot.

### BACKGROUND

Robot is an intelligent machine that can work semi-autonomously or fully autonomously. Robot can perform task such as operations or movements through programming and automatic control. Robot has basic characteristics such as perception, decision-making, and execution. It can assist or even replace humans in completing dangerous, heavy, and complex work, improve work efficiency and quality, serve human life, and expand or extend the scope of people's activities and abilities.

With the deepening of people's understanding of the intelligent nature of robot technology, robot technology has begun to continuously penetrate into all fields of human activities. Combining the application characteristics of these fields, people have developed a variety of special robots and various intelligent robots with perception, decision-making, action and interaction capabilities. It is the product of advanced integrated cybernetics, mechanical electronics, computers, materials and bionics, and has important uses in industry, medicine, agriculture, service industry, construction and even military fields.

FR 3 115 011 A1 discloses a steering linkage mechanism. The steering linkage mechanism comprises a right link and a left link. One end of the right link is sleeved on a central pivot of a driving member via a a central pivot assembly, and one end of the left link is sleeved on the central pivot of the driving member via the central pivot assembly. Each of the right pivot assembly, the left pivot assembly and the central pivot assembly comprises a sleeve and two bearings. A radially protruding radial step section is provided at the middle section of the outer side surface of the sleeve. The two bearings are sleeved on the sleeve and located on the upper side and lower side of the radial step section, respectively. The inner ring wall of each bearing abuts against the sleeve, and the outer ring wall of each bearing is assembled with the corresponding right link or left link. The inner ring wall of each bearing abuts against the radial step section. Each of the right pivot assembly, the left pivot assembly and the central pivot assembly comprises two sealing members. The two sealing members are sleeved on both ends of the sleeve, with the two bearings disposed between the two sealing members. A protrusion is formed on the inner end surface of each sealing member. The protrusion abuts against the inner ring wall of the corresponding bearing, and the total height of the abutted bearing and sealing member is greater than the length of the axial step section. The central pivot assembly comprises a waterproof sealing sleeve, which is arranged on the outer side surface of a radial step section of the sleeve to assist in improving the waterproof effect.

EP 0 362 848 A2 discloses a joint of a robot. One end of a support frame of a first arm arranged between two support columns is connected with a driving shaft and supported by the first support column through a bearing, and the other end is supported by a driving shaft of the second arm through a bearing. In order to make the supporting mechanism of the first arm and the second arm rigid and ensure the accurate operation of the mechanism, it is necessary to eliminate the excessive clearance of the bearing. The inner rings of the bearings are fixed on a bracket and a drive shaft, respectively. One of the two outer rings of the bearings must be pressed against the other by pressing plates, which are adjustably fixed on pillars by mechanical screws.

### SUMMARY

It is an object of the present invention to provide an improved articulated assembly, a corresponding mechanical joint, and a corresponding robot.

This object is solved by the subject matter of the independent claim 1.

Preferred embodiments are defined by the dependent claims.

### BRIEF DESCRIPTION OF DRAWINGS

In order to more clearly explain the technical solutions of the embodiments of the present disclosure, the drawings of the embodiments will be briefly introduced below, and it is obvious that the drawings in the following description only relate to some embodiments of the present disclosure, and do not limit the present disclosure.
Fig. 1 is a schematic structural diagram of an articulated assembly provided by an embodiment of the present disclosure;
Fig. 2 is a schematic disassembly view of an articulated assembly illustrated by Fig. 1;
Fig. 3 is a disassembly cross-sectional view of an articulated assembly illustrated by Fig. 1;
Fig. 4 is a schematic cross-sectional view of an articulated assembly illustrated by Fig. 1;
Fig. 5 is a partially enlarged schematic view of an articulated assembly illustrated by Fig. 4;
Fig. 6 is a partially enlarged schematic view of a bearing housing, a first receiving ring, and a second receiving ring illustrated by Fig. 5;
Fig. 7 is another schematic cross-sectional view of an articulated assembly illustrated by Fig. 1;
Fig. 8 is a partial enlarged view of a second fastening element and a fastening end cap of Fig. 7; and
Fig. 9 is a schematic cross-sectional view of a mating surface between a second receiving ring and a third structural member according to an embodiment of the present disclosure.

### DETAILED DESCRIPTION

In order to make the purpose, technical solutions, and advantages of the embodiments of the present disclosure more clear, the technical solutions of the embodiments of the present disclosure will be clearly and completely described below with reference to the drawings of the embodiments of the present disclosure. Obviously, the described embodiments are some embodiments of the present disclosure, but not all embodiments. The scope of protection of the present disclosure is defined by the appended claims.

Unless otherwise defined, technical terms or scientific terms used in the present disclosure should have the usual meaning understood by those of ordinary skill in the art to which the present disclosure belongs. The words "first," "second," and similar words used in the present disclosure do not mean any order, quantity, or importance, but are merely used to distinguish different components. Like words such as "comprising" or "including" mean that an element or item that appears before the word encompasses the element or item that appears after the word, and does not exclude other elements or items.

In the structural design of robot, there are often scenarios where the hinge point of multi-link need to be fixed. The design requires reliable connection, detachability and maintainability.

Embodiments of the present disclosure provide an articulated assembly, a mechanical joint, and a robot. The articulated assembly includes a plurality of structural members, the plurality of structural members includes a first structural member, a second structural member, and a third structural member. The articulated assembly further includes a plurality of bearings, the plurality of bearings includes a first bearing and a second bearing. An outer ring of the first bearing is matched with a bearing housing of the first structural member, and an outer ring of the second bearing is matched with a bearing housing of the second structural member. The first bearing and the second bearing are coaxially arranged and arranged along an axial direction of the first bearing, and the bearing housing of the second structural member is located between the bearing housing of the first structural member and the third structural member along the axial direction.

The articulated assembly further includes a first receiving ring and a second receiving ring, the first receiving ring is located between the first bearing and the second bearing along the axial direction, and two end surfaces of the first receiving ring are respectively in abutment with an inner ring of the first bearing and an inner ring of the second bearing. Along the axial direction, the second receiving ring is located between the second bearing and the third structural member, and two end surfaces of the second receiving ring are respectively abutment with the inner ring of the second bearing and the third structural member.

The articulated assembly further includes a fastening assembly, the fastening assembly fastens the inner ring of the first bearing, the first receiving ring, the inner ring of the second bearing, the second receiving ring, and the third structural member together along the axial direction.

In the articulated assembly provided by the embodiments of the present disclosure, two end surfaces of the first receiving ring are respectively abutment with the inner rings of the first bearing and the second bearing, and two end surfaces of the second receiving ring are respectively abutment with the inner ring of the second bearing and the third structural member, and the inner ring of the first bearing, the first receiving ring, the inner ring of the second bearing, the second receiving ring, and the third structural member are fastened together by the fastening assembly. Thus, the rotation of the third structural member around the axial direction can be linked with the inner ring of the first bearing and the inner ring of the second bearing. Moreover, under the fastening of the fastening assembly, there is no gap between the third structural member, the second receiving ring, the inner ring of the second bearing, the first receiving ring and the inner ring of the first bearing, and when the third structural member rotates around the axial direction, there is no shaking between the third structural member, the second receiving ring, the inner ring of the second bearing, the first receiving ring and the inner ring of the first bearing, the gap between the third structural member, the inner ring of the first bearing, and the inner ring of the second bearing in the linkage process is eliminated, the shaking of the third structural member, the inner ring of the first bearing, and the inner ring of the second bearing in the linkage process is avoided, the transmission precision and efficiency between the third structural member, the first bearing, and the second bearing are improved, the transmission gap of the articulated assembly is reduced, the transmission precision and efficiency of the articulated assembly are improved, and the connection reliability of the articulated assembly is ensured.

Hereinafter, the articulated assembly, the mechanical joint, and the robot provided by embodiments of the present disclosure will be described in detail with reference to the accompanying drawings.

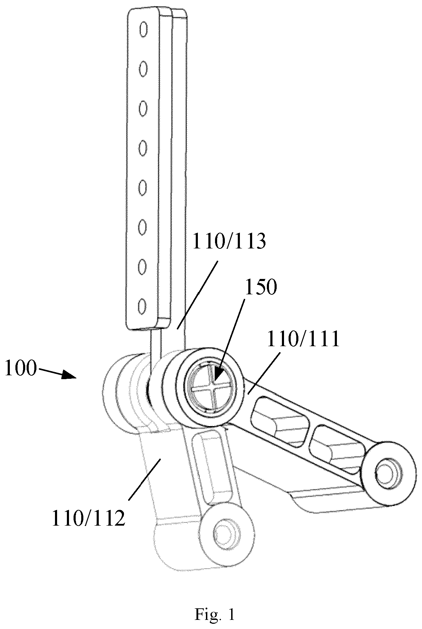

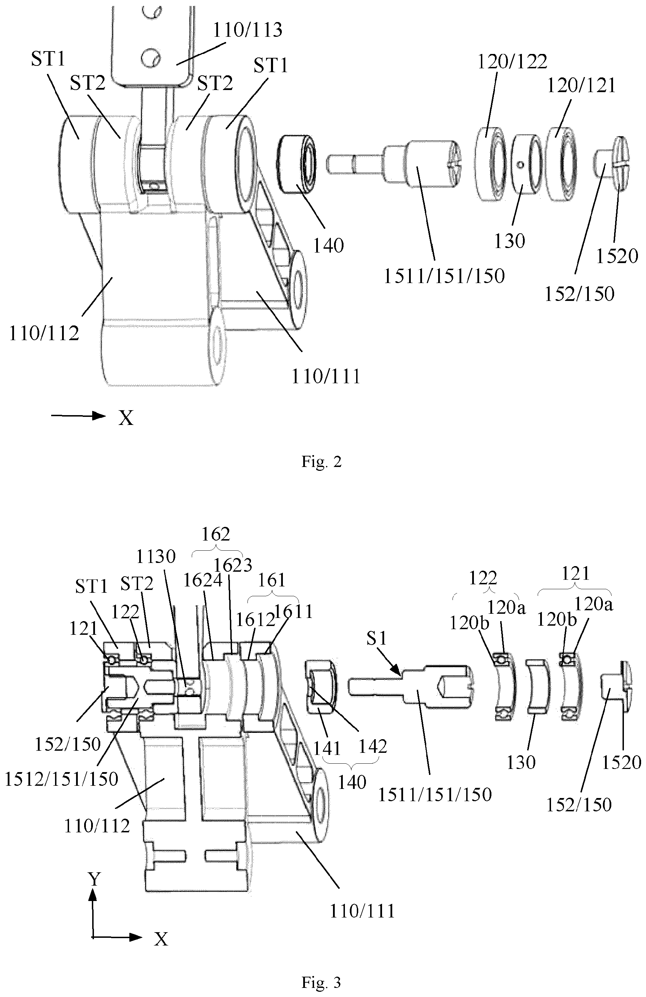

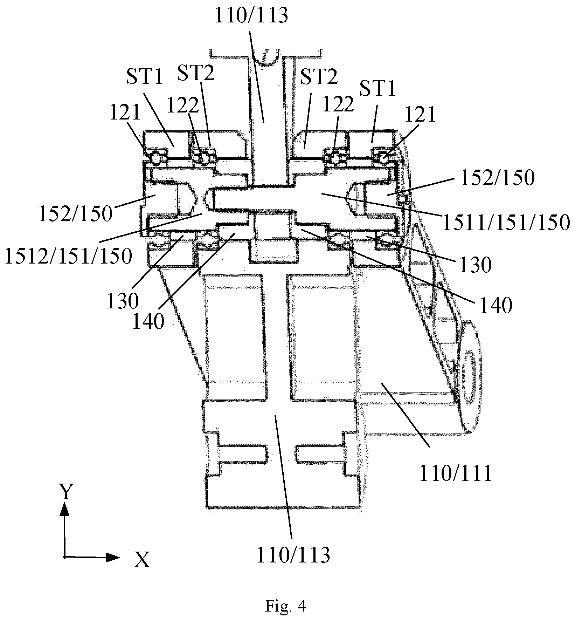

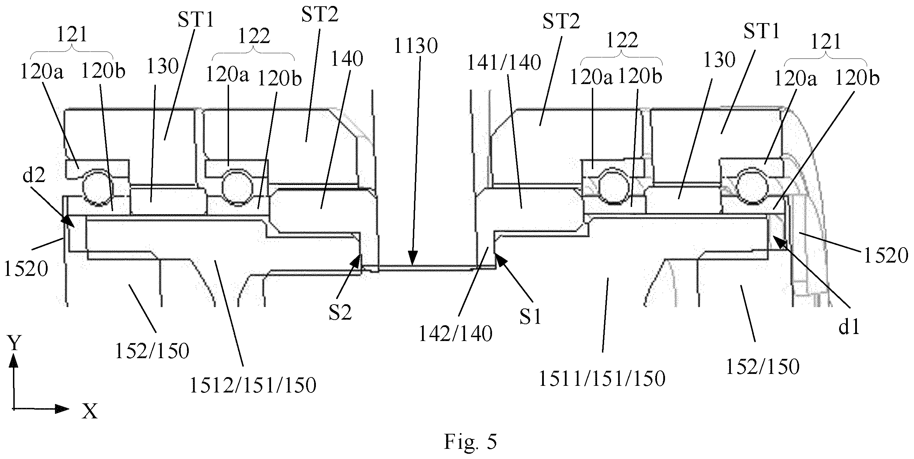

Embodiments of the present disclosure provide an articulated assembly. Fig. 1 is a schematic structural diagram of an articulated assembly provided by an embodiment of the present disclosure. Fig. 2 is a schematic disassembly view of an articulated assembly illustrated by Fig. 1, and Fig. 3 is a disassembly cross-sectional view of an articulated assembly illustrated by Fig. 1; Fig. 4 is a schematic cross-sectional view of an articulated assembly illustrated by Fig. 1; Fig. 5 is a partially enlarged schematic view of an articulated assembly illustrated by Fig. 4. As illustrated by Figs. 1 to 5, an articulated assembly 100 includes a plurality of structural members 110, the plurality of structural members 110 includes a first structural member 111, a second structural member 112, and a third structural member 113. The articulated assembly 100 further includes a plurality of bearings 120, the plurality of bearings 120 includes a first bearing 121 and a second bearing 122. An outer ring 120a of the first bearing 121 is matched with the bearing housing ST1 of the first structure 111, and an outer ring 120a of the second bearing 122 is matched with the bearing housing ST2 of the second structure 112. The first bearing 121 and the second bearing 122 are coaxially arranged and arranged along an axial direction X of the first bearing 121, and the bearing housing ST2 of the second structural member 112 is located between the bearing housing ST1 of the first structural member 111 and the third structural member 113 along the axial direction X.

The articulated assembly 100 further includes a first receiving ring 130 and a second receiving ring 140, the first receiving ring 130 is located between the first bearing 121 and the second bearing 122 along the axial direction X, and two end surfaces of the first receiving ring 130 are respectively in abutment with the inner ring 120b of the first bearing 121 and the inner ring 120b of the second bearing 122. Along the axial direction X, the second receiving ring 140 is located between the second bearing 122 and the third structural member 113, and two end surfaces of the second receiving ring 140 are respectively abutment with the inner ring 120b of the second bearing 122 and the third structural member 113.

The articulated assembly 100 further includes a fastening assembly 150, the fastening assembly fastens the inner ring 120b of the first bearing 121, the first receiving ring 130, the inner ring 120b of the second bearing 122, the second receiving ring 140, and the third structural member 113 together along the axial direction X.

In the articulated assembly provided by the embodiments of the present disclosure, two end surfaces of the first receiving ring 130 are respectively abutment with the inner rings 120b of the first bearing 121 and the second bearing 122, and two end surfaces of the second receiving ring 140 are respectively abutment with the inner ring 120b of the second bearing 122 and the third structural member 113, and the inner ring 120b of the first bearing 121, the first receiving ring 130, the inner ring 120b of the second bearing 122, the second receiving ring 140, and the third structural member 113 are fastened together by the fastening assembly 150. Thus, the rotation of the third connector around the axial direction X can be linked with the inner ring 120b of the first bearing 121 and the inner ring 120b of the second bearing 122. Moreover, under the fastening of the fastening assembly 150, there is no gap between the third structural member 113, the second receiving ring 140, the inner ring 120b of the second bearing 122, the first receiving ring 130, and the inner ring 120b of the first bearing 121. When the third structural member 113 rotates around the axial direction X, there is no shaking between the third structural member 113, the second receiving ring 140, the inner ring 120b of the second bearing 122, the first receiving ring and the inner ring 120b of the first bearing 122, the gap between the third structural member 113, the inner ring 120b of the first bearing 121, and the inner ring 120b of the second bearing 122 in the linkage process is eliminated, the shaking of the third structural member 113, the inner ring 120b of the first bearing 121, and the inner ring 120b of the second bearing 122 in the linkage process is avoided, the transmission precision and efficiency between the third structural member 113, the first bearing 121, and the second bearing 122 are improved, the transmission gap of the articulated assembly 100 is reduced, the transmission precision and efficiency of the articulated assembly 100 are improved, and the connection reliability of the articulated assembly 100 is ensured.

In some examples, as illustrated by Figs. 1 to 5, the third structural member 113 includes a through hole 1130, and the fastening assembly 150 includes a penetration portion 151, the penetration portion 151 of the fastening assembly 150 passes through the first bearing 121, the first receiving ring 130, the second bearing 122, the second receiving ring 140, and the through hole 1130 of the third structural member 113, as illustrated by Fig. 5, the penetration portion 151 is in clearance fit with each of the first receiving ring 130, the second bearing 122, the second receiving ring 140, and the through hole 1130 of the third structural member 113 in a radial direction Y perpendicular to the axial direction X. The radial direction illustrated by the drawings is only one direction schematically illustrated, and the radial direction of the present disclosure may be another direction perpendicular to the axial direction, or may be any direction perpendicular to the axial direction.

In this example, by making the penetration portion 151 of the fastening assembly 150 and the above-described components fit with a clearance in the radial direction Y, assembly, disassembly, or maintenance between the fastening assembly 150 and the above-described components can be facilitated without damaging the fastening assembly 150 and the above-described components, the convenience of assembly, disassembly, and maintenance of the articulated assembly 100 can be improved, and the cost of assembly, disassembly, and maintenance can be reduced. Further, the clearance fit in the radial direction does not affect the linkage, transmission accuracy, and transmission efficiency between the third structural member 113, the inner ring 120b of the first bearing 121, and the inner ring 120b of the second bearing 122. In addition, by making the penetration portion 151 of the fastening assembly 150 pass through the first bearing 121, the first receiving ring 130, the second bearing 122, the second receiving ring 140, and the penetration hole 1130 of the third structural member 113, the fastening of the above-described components by the fastening assembly 150 can be made more stable and reliable, and the outer peripheral space of the articulated assembly 100 can not be occupied, and the structural design and functional expansion of the articulated assembly 100 can be facilitated.

The embodiments of the present disclosure do not limit the respective gap values in the radial direction between the penetration portion and the first receiving ring, the second bearing, the second receiving ring, and the penetration hole of the third structural member. For example, each gap value may be convenient for assembly, disassembly, or maintenance between each component. For example, the respective gap values are taken in the range of 0.5 mm to 10 cm. For example, the respective gap values may be 1 mm, 3 mm, 5 mm, 8 mm, 1 cm, 5 cm, etc., and will not be described herein.

In some examples, as illustrated by Figs. 4 and 5, a portion of the first receiving ring 130 is located within the bearing housing ST1 of the first structural member 111 and a portion of the second receiving ring 140 is located within the bearing housing ST2 of the second structural member 112. By making the portion of the first receiving ring 130 to be located in the bearing housing ST1 of the first structural member 111, it can reduce the space occupied by the first receiving ring 130 in the axial direction X of the articulated assembly 100, so that the articulated assembly 100 has a relatively small size in the axial direction X. Further, in the axial direction X, the first receiving ring 130 is overlapped with the bearing housing ST1 of the first structural member 111, so that the size of the bearing housing ST1 of the first structural member 111 in the axial direction X can be increased, and the strength and structural durability of the first structural member 111 can be increased. The portion of the second receiving ring 140 located in the bearing housing ST2 of the second structure has a similar technical effect, and will not be repeated here.

In some examples, as illustrated by Figs. 4 and 5, the first receiving ring 130 is in clearance fit with the bearing housing ST1 of the first structural member 111 in the radial direction Y, and the second receiving ring 140 is in clearance fit with the bearing housing ST2 of the second structural member 112 in the radial direction Y. The first receiving ring 130 is in clearance fit with the bearing housing ST1 of the first structural member 111 in the radial direction Y, which facilitates assembly, disassembly, and maintenance between the first receiving ring 130 and the first structural member 111, and does not affect the linkage, transmission accuracy, and transmission efficiency between the third structural member 113, the inner ring 120b of the first bearing 121, and the inner ring 120b of the second bearing 122. The second receiving ring 140 is in clearance fit with the bearing housing ST2 of the second structural member 112 in the radial direction Y, which facilitates assembly, disassembly, and maintenance between the second receiving ring 140 and the second structural member 112, and does not affect the linkage, transmission accuracy, and transmission efficiency between the third structural member 113, the inner ring 120b of the first bearing 121, and the inner ring 120b of the second bearing 122.

The embodiments of the present disclosure do not limit the gap between the first receiving ring 130 and the bearing housing ST1 in the radial direction Y, and the gap between the second receiving ring 140 and the bearing housing ST2 in the radial direction Y. For example, each gap value may be convenient for assembly, disassembly, or maintenance between each component. For example, the respective gap values are taken in the range of 0.5 mm to 10 cm. For example, the respective gap values may be 1 mm, 3 mm, 5 mm, 8 mm, 1 cm, 5 cm, etc., and will not be described herein.

For example, as illustrated by Figs. 3 to 5, the bearing housing ST1 of the first structural member 111 includes a first through hole 161 coaxial with the first bearing 121, the first through hole 161 includes a first sub-through hole 1611 and a second sub-through hole 1612, the first bearing 121 is located in the first sub-through hole 1611, a portion of the first receiving ring 130 is located in the second sub-through hole 1612, and a diameter of an outer side surface of the first receiving ring 130 is smaller than a diameter of the second sub-through hole 1612.

For example, as illustrated by Figs. 3 to 5, the bearing housing ST2 of the second structural member 112 includes a second through hole 162 coaxial with the second bearing 122, the second through hole 162 includes a third sub-through hole 1623 and a fourth sub-through hole 1624, the second bearing 122 is located in the third sub-through hole 1623, a portion of the second receiving ring 140 is located in the fourth sub-through hole 1624, and a diameter of an outer side surface of the second receiving ring 140 is smaller than a diameter of the fourth sub-through hole 1624.

In some examples, as illustrated by Figs. 3 to 5, the penetration portion 151 of the fastening assembly 150 includes a first fastening element 1511 and a second fastening element 1512 connectable to each other in the axial direction X, the first fastening element 1511 is fixedly connected to the second fastening element 1512 through the first bearing 121, the first receiving ring 130, the second bearing 122, the second receiving ring 140, and the through hole 1130 of the third structural member 113. The first fastening element 1511 and the second fastening element 1512 which can be connected to each other facilitates the fastening of other parts of the articulated assembly 100 by the fastening assembly 150, and facilitates convenience of assembly, disassembly, and maintenance of the articulated assembly 100. Furthermore, the first fastening element 1511 passes through the through hole of the third structural member 113, and the fixing reliability of the third structural member 113 and the structural reliability of the articulated assembly 100 can be improved.

In some examples, as illustrated by Figs. 3 to 5, the first fastening element 1511 and the second fastening element 1512 are screwed to each other. Of course, the embodiments of the present disclosure are not limited thereto. For example, they may be snapped into each other, magnetically connected to each other, or the like.

In some examples, as illustrated by Figs. 3 to 5, the second receiving ring 140 includes a ring portion 141 and a seat cover 142, the ring portion 141 is surrounding the penetration portion 151, and the seat cover 142 is connected to and located within the ring portion 141, and both of the seat cover 142 and the ring portion 141 are in abutment with the third structural member 113 in the axial direction X. By providing the seat cover 142 being abutment with the third structural member 113, a contact area between the second receiving ring 140 and the third structural member 113 can be increased, and when the fastening assembly 150 fastens the second receiving ring 140 and the third structural member 113 together, the larger the contact area, the higher the stability of the linkage between the two.

In some examples, as illustrated by Figs. 3 to 5, the first fastening element 1511 includes a first abutment surface S1 perpendicular to the axial direction X, and along the axial direction X, the seat cover 142 of the second receiving ring 140 is located between the first abutment surface S1 and the third structural member 113, and the first abutment surface S1 of the first fastening element 1511 is in abutment with the seat cover 142 of the second receiving ring 140. The seat cover 142 is provided in the ring portion 141, and when the penetration portion 151 of the fastening assembly 150 penetrates the ring portion 141 of the second receiving ring 140, the first abutment surface S1 of the first fastening element 1511 is in abutment with the seat cover 142. Therefore, the fastening force of the fastening assembly 150 can directly act on the second receiving ring 140, so that the fastening assembly 150 and the second receiving ring 140, the second receiving ring 140 and the third structural member are better fastened together, and the stability of the linkage between the second receiving member and the third structural member 113 is improved, thereby improving the stability of the linkage between the third structural member 113 and the inner ring 120b of the second bearing 122. Further, since the first abutment surface S1 of the fastening assembly 150 is in abutment with the seat cover 142 of the second receiving ring 140 instead of the third structural member 113, it can prevent the fastening assembly 150 from directly acting on the third structural member 113, and it can avoid adverse effects on the structure, life, and the like of the third structural member 113. For if the fastening assembly 150 directly acts on the third structural member 113, the fastening assembly 150 may have adverse effects such as abrasion on the third structural member 113 during screwing.

As illustrated by Figs. 3 to 5, the plurality of bearings 120 includes two first bearings 121 and two second bearings 122, the outer rings 120a of the two first bearings 121 are fitted with two bearing housings ST1 of the first structural member 111, and the outer rings 120a of the two second bearings 122 are fitted with two bearing housings ST1 of the second structural member 112. Along the axial direction X, the two first bearings 121 are respectively located at two sides of the third structural member 113, the two second bearings 122 are respectively located at two sides of the third structural member 113, and each first bearing 121 is located at a side of the second bearing 122 away from the third structural member 113. The articulated assembly 100 includes two first receiving rings 130, the two first receiving rings 130 are respectively located at two sides of the third structural member 113, and each of the two first receiving rings 130 is located between the first bearing 121 and the second bearing 122. Thus, structural stability and performance stability of the articulated assembly 100 can be increased. For example, the torsional performance of the articulated assembly 100 can be enhanced.

For example, as illustrated by Figs. 1 to 5, the two bearing housings ST1 of the first structural member 111 are connected to each other. For example, a shape of the two bearing housings ST1 of the first structural member 111 connected to each other is U-shaped. For example, the two bearing housings ST1 of the second structural member 112 are connected to each other. For example, a shape of the two bearing housings ST1 of the second structural member 112 connected to each other is U-shaped.

In some examples, as illustrated by Figs. 3 to 5, the articulated assembly 100 includes two second receiving rings 140, the two second receiving rings 140 are respectively located at two sides of the third structural member 113, and each of the two second receiving ring 140 is located between the second bearing 122 and the third structural member 113. The inner rings 120b of the two second bearings 122 located at two sides of the third structural member 113 are respectively in abutment with the two second receiving rings 140, and the two second receiving rings 140 are in abutment with the third structural member 113, so that the stability and reliability of the linkage between the third structural member 113 and the inner rings 120b of the two second bearings 122 can be improved.

In some examples, as illustrated by Figs. 3 to 5, the first fastening element 1511 passes through the first bearing 121, the first receiving ring 130, the second bearing 122, the second receiving ring 140, and the through hole 1130 of the third structural member 113 located at a same side of the third structural member 113, and the second fastening element 1512 passes through the first bearing 121, the first receiving ring 130, the second bearing 122, and at least a portion of the second receiving ring 140 located at another side of the third structural member 113.

In some examples, as illustrated by Figs. 3 to 5, the two second receiving rings 140 each include a ring portion 141 and a seat cover 142, and the first fastening element 1511 includes a first abutment surface S1 perpendicular to the axial direction X, the first abutment surface S1 of the first fastening element 1511 S1 perpendicular to the axial direction X, the first abutment surface S1 of the first fastening element 1511 is in abutment with the seat cover 142 of the second receiving ring 140 located at the same side as the first fastening element 1511 and causing the seat cover 142 to be in abutment with the third structural member 113. For example, the first abutment surface S1 may be a step surface of the first fastening element 1511.

In some examples, as illustrated by Figs. 3 to 5, the second fastening element 1512 includes a second abutment surface S2 perpendicular to the axial direction X, the second abutment surface S2 of the second fastening element 1512 is in abutment with the seat cover 142 of the second receiving ring 140 located at the same side as the second fastening element 1512 and causing the seat cover 142 to be in abutment with the third structural member 113. Therefore, the fastening force of the fastening assembly 150 can directly act on the second receiving ring 140, so that the fastening assembly 150 and the second receiving ring 140, the first receiving ring 140 and the third structural member are better fastened together, and the stability of the linkage between the second receiving member and the third structural member 113 is improved, thereby improving the stability of the linkage between the third structural member 113 and the inner ring 120b of the second bearing 122. Further, since the second abutment surface S2 of the fastening assembly 150 is in abutment with the seat cover 142 of the second receiving ring 140 instead of the third structural member 113, it can prevent the fastening assembly 150 from directly acting on the third structural member 113, and to prevent adverse effects on the structure, life, and the like of the third structural member 113. For example, the second abutment surface S2 may be an end surface of the second fastening element 1512.

In some examples, as illustrated by Figs. 3 to 5, the seat cover 142 of the second receiving ring 140 has an open hole coaxial with the through hole 1130. For example, a diameter of the open hole of the seat cover 142 is substantially the same as a diameter of the through hole 1130. Accordingly, the second receiving ring 140 and the third structural member 113 can have a relatively large contact area.

In some examples, as illustrated by Figs. 3 to 5, a thickness of the first receiving ring 130 in the radial direction Y is greater than a thickness of the inner ring 120b of the first bearing 121 in the radial direction Y, and the thickness of the first receiving ring 130 in the radial direction Y is greater than the thickness of the inner ring 120b of the second bearing 122 in the radial direction Y. The thickness of the first receiving ring 130 in the radial direction Y is half of a difference between a diameter of an outer surface and a diameter of an inner surface of the first receiving ring 130, the thickness of the inner ring 120b of the first bearing 121 in the radial direction Y is half of a difference between a diameter of an outer surface and a diameter of an inner surface of the inner ring 120b, and the thickness of the inner ring 120b of the second bearing 122 in the radial direction Y is half of the difference between the diameter of the outer surface and the diameter of the inner surface of the inner ring 120b. Therefore, when the first receiving ring 130 is in clearance fit with each of the fastening assembly 150 and the first structural member 111 in the radial direction Y, it can ensure that the first receiving ring 130 more reliably abuts against the inner ring 120b of the first bearing 121 and the inner ring 120b of the second bearing 122.

For example, the thickness of the first receiving ring 130 in the radial direction Y is not less than twice the thickness of the inner ring 120b of the first bearing 121 in the radial direction Y. For example, the thickness of the first receiving ring 130 in the radial direction Y is not less than twice the thickness of the inner ring 120b of the second bearing 122 in the radial direction Y.

In some examples, as illustrated by Figs. 3 to 5, a thickness of the ring portion 141 of the second receiving ring 140 in the radial direction Y is greater than the thickness of the inner ring 120b of the second bearing 122 in the radial direction Y. The thickness of the ring portion 141 of the second receiving ring 140 in the radial direction Y is half of the difference between the diameter of the outer surface and the diameter of the inner surface of the ring portion 141. Therefore, when the second receiving ring 140 is in clearance fit with both the fastening assembly 150 and the second structural member 112 in the radial direction Y, it can ensure that the second receiving ring 140 more reliably abuts against the inner ring 120b of the second bearing 122.

For example, the thickness of the ring portion 141 of the second receiving ring 140 in the radial direction Y is not less than twice the thickness of the inner ring 120b of the second bearing 122 in the radial direction Y.

In some examples, as illustrated by Figs. 2 to 5, the fastening assembly 150 further includes a fastening end cap 152, the fastening end cap 152 is screwed at an end portion of the penetration portion 151 in the axial direction X. The fastening end cap 152 includes a cap-shaped portion 1520, the cap-shaped portion 1520 is in abutment with the inner ring 120b of the first bearing 121 in the axial direction X. Thus, the articulated assembly 100 can be fastened together by fastening the fastening end cap 152.

For example, as illustrated by Figs. 3 to 5, the fastening assembly 150 includes two fastening end caps 152, one fastening end cap 152 is screwed with an end portion of the first fastening element 1511 away from the second fastening element 1512, and another fastening end cap 152 is screwed with an end portion of the second fastening element 1512 away from the first fastening element 1511. Of course, the embodiments of the present disclosure are not limited thereto. For example, the end cap of the fastening assembly 150 that abuts on the inner ring 120b of the first bearing 121 may be a nut integral with the first fastening element 1511 or the second fastening element 1512.

In some examples, as illustrated by Figs. 3 to 5, the cap-shaped portion 1520 is in clearance fit with an end portion of the penetration portion 151 along the axial direction X. For example, in the axial direction X, the cap-shaped portion 1520 of the fastening end cap 152 screwed to the end portion of the first fastening element 1511 is in clearance fit with the end of the first fastening element 1511 with a clearance d1 therebetween. For example, in the axial direction X, the cap-shaped portion 1520 of the fastening end cap 152 screwed to the end portion of the second fastening element 1512 is in clearance fit with the end portion of the second fastening element 1512 with a clearance d2 therebetween. By adjusting the dimension of the first receiving ring 130 or the second receiving ring 140 in the axial direction X, an axial clearance of the first bearing 121 or the second bearing 122 can be reduced, and the transmission clearance can be reduced, thereby reducing the shaking of each structural member 110 of the articulated assembly 100 and improving the transmission accuracy of the articulated assembly 100. The clearance between the cap-shaped portion 1520 and the end portion of the penetration portion 151 can be used to compensate for the influence of the first receiving ring 130 or the second receiving ring 140 having different size on the assembly of the fastening assembly 150 and the articulated assembly 100, thereby improving the versatility of the fastening assembly 150 and the articulated assembly 100.

In some examples, as illustrated by Figs. 3 to 5, the first bearing 121 is arranged at a side of the bearing housing ST1 of the first structural member 111 away from the bearing housing ST2 of the second structural member 112, and the second bearing 122 is arranged at a side of the bearing housing ST2 of the second structural member 112 close to the bearing housing ST1 of the first structural member 111. Therefore, it can facilitate assembly, disassembly, maintenance, and the like of the articulated assembly 100.

In some examples, the outer ring of the first bearing is in interference fit with the bearing housing of the first structural member, and the outer ring of the second bearing is in interference fit with the bearing housing of the second structural member. Therefore, the transmission clearance of the articulated assembly is only the bearing clearance of the first bearing and the second bearing, which can reduce the transmission clearance of the articulated assembly and improve the transmission accuracy and transmission efficiency of the articulated assembly.

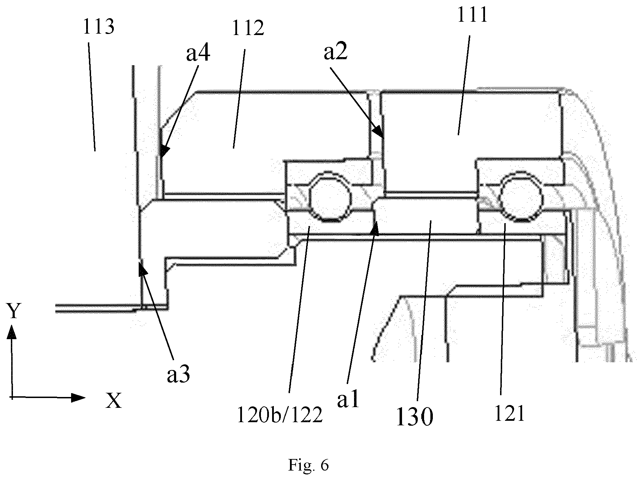

Fig. 6 is a partially enlarged schematic view of a bearing housing, a first receiving ring, and a second receiving ring illustrated by Fig. 5. As illustrated by Figs. 5 and 6, in the axial direction X, an end surface a1 of the first receiving ring 130 that abuts against the inner ring 120b of the second bearing 122 protrudes from an end surface a2 of the first structural member 111 close to the second structural member 112. Therefore, the first receiving ring 130 can further realize the interval between the first structural member 111 and the second structural member 112, the movements of the first structural member 111 and the second structural member 112 do not affect each other, and it is not necessary to add other components to realize the interval between the two.

In some examples, as illustrated by Figs. 3 to 5, an end surface a3 of the second receiving ring 140 that abuts against the third structural member 113 protrudes from an end surface a4 of the second structural member 112 close to the third structural member 113 in the axial direction X. Therefore, the second receiving ring 140 can further realize the interval between the second structural member 112 and the third structural member 113, the movements of the second structural member 112 and the third structural member 113 do not affect each other, and it is not necessary to add other components to realize the interval between the two.

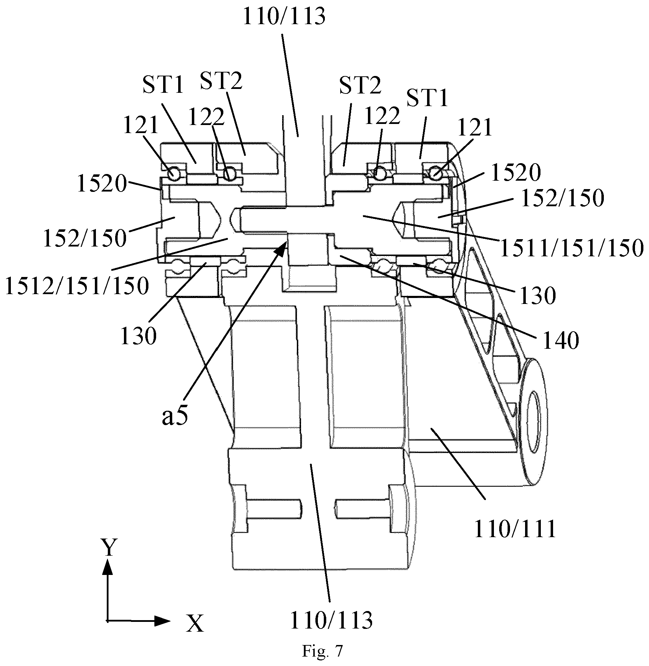

Fig. 7 is another schematic cross-sectional view of an articulated assembly illustrated by Fig. 1. As illustrated by Figs. 1 and 7, the articulated assembly 100 includes one second receiving ring 140, the first fastening element 1511 passes through the first bearing 121, the first receiving ring 130, the second bearing 122, the second receiving ring 140 and the through hole 1130 of the third structural member 113 located at a same side of the third structural member 113, the second fastening element 1512 passes through the first bearing 121, the first receiving ring 130 and the second bearing 122 located at another side of the third structural member 113, and an end surface a5 of the second fastening element 1512 is in abutment with the third structural member 113. In this embodiment, the end surface a5 of the second fastening element 1512 close to the third structural member 113 abuts against the third structural member 113, so that the first fastening element 1511 and the second fastening element 1512 connected to each other can fasten the third structural member 113 together with the inner ring 120b of the first bearing 121, the first receiving ring 130, the inner ring 120b of the second bearing 122, and the second receiving ring 130 located at the same side as the first fastening element 1511, thereby realizing the linkage of the third structural member 113, the inner ring 120b of the first bearing 121, and the inner ring 120b of the second bearing 122. In addition, the articulated assembly 100 has only one second receiving ring 140, which can also reduce the weight of the articulated assembly 100.

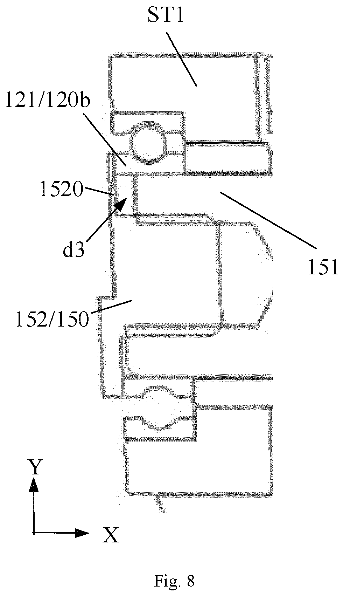

Fig. 8 is a partial enlarged view of a second fastening element and a fastening end cap of Fig. 7. As illustrated by Figs. 7 and 8, in the axial direction X, the cap-shaped portion 1520 of the fastening end cap 152 and the end portion of the penetration portion 151 are in clearance fit with a clearance d3 therebetween. For example, in the axial direction X, the cap-shaped portion 1520 of the fastening end cap 152 screwed to the end portion of the first fastening element 1511 is in clearance fit with the end portion of the first fastening element 1511. For example, in the axial direction X, the cap-shaped portion 1520 of the fastening end cap 152 screwed to the second fastening element 1512 is in clearance fit with the end portion of the second fastening element 1512. The structural features of this part are the same as those of the above-described embodiments, and will not be repeatedly described here.

By having the cap-shaped portion 1520 clearance fit with the end portion of the penetration portion 151, the locking amount of the fastening end cap 152 and the second fastening element 1512 can be adjusted. When the fastening end cover 152 screwed to the end portion of the second fastening element 1512 is locked with the second fastening element 1512, a side of the inner ring 120b of the second bearing 122 located at the same side as the second fastening element 1512 close to the third structural member 113 is not supported, and the inner ring 120b of the first bearing 121 and the inner ring 120b of the second bearing 122 may move toward the third structural member 113 in the axial direction X under the action of the fastening force, and the axial clearance of the first bearing 121 and the axial clearance of the second bearing 122 can both be reduced, so that both the first bearing 121 and the second bearing 122 can realize axial preload. The transmission gap becomes relatively small, and the shaking amount of each structural member 110 of the articulated assembly 100 in the axial direction X becomes relatively small, thus improving the transmission accuracy of the articulated assembly 100. By making the cap-shaped portion 1520 fit with the end portion of the penetration portion 151 in a clearance, the locking amount of the fastening end cap 152 and the second fastening member 1512 can be adjusted, and the size of the axial clearance between the first bearing 121 and the second bearing 122 can be adjusted, which not only reduces the transmission clearance of the articulated assembly 100 and improves the transmission accuracy thereof, but also realizes the adjustment of the size of the transmission clearance.

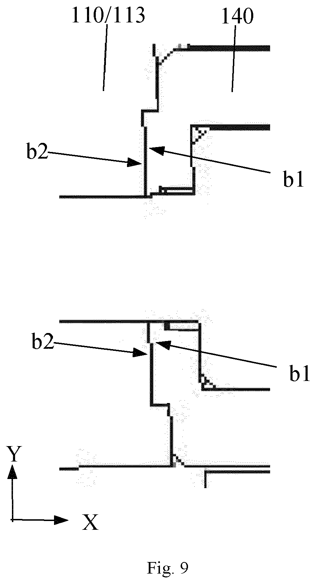

Fig. 9 is a schematic cross-sectional view of a mating surface between a second receiving ring and a third structural member according to an embodiment of the present disclosure. As illustrated by Fig. 9, one of the end surface of the second receiving ring 140 close to the third structural member 113 and the surface of the third structural member 113 close to the second receiving ring 140 is provided with a protruding structure and the other is provided with a groove structure, and when the end surface of the second receiving ring 140 close to the third structural member 113 is in abutment with the third structural member 113, the protruding structure is located in the groove structure. The drawing schematically shows that the end surface of the second receiving ring 140 close to the third structure 113 is provided with the protruding structure b1, and the surface of the third structure 113 close to the second receiving ring 140 is provided with the groove structure b2. Therefore, when the third structural member 113 rotates around the axial direction X, the matching of the protruding structure and the groove structure can improve the stability and reliability of the linkage between the second receiving ring 140 and the third structural member 113.

For example, an end surface of the second receiving ring close to the second bearing and an end surface of the inner ring of the second bearing close to the second receiving ring may further be provided with the protruding structure and the groove structure which are matched with each other. For example, an end surface of the first receiving ring close to the second bearing and an end surface of the inner ring of the second bearing close to the first receiving ring may further be provided with the protruding structure and the groove structure which are matched with each other. For example, an end surface of the first receiving ring close to the first bearing and an end surface of the inner ring of the first bearing close to the first receiving ring may further be provided with the protruding structure and the groove structure which are matched with each other. For example, an end surface of the inner ring of the first bearing close to the fastening end cap and a surface of the fastening end cap close to the first bearing may further be provided with the protruding structure and the groove structure which are matched with each other. For example, the inner ring of the first bearing includes a plastic housing, and the protruding structure or the groove structure may be a structure formed on the plastic housing, so that the processing and fabrication of the protruding structure or the groove structure and the generalization of the bearing can be more convenient.

Embodiments of the present disclosure further provide a mechanical joint. The mechanical joint includes any of the articulated assemblies described above. Thus, the mechanical joint has beneficial effects corresponding to those of the articulated assembly, which will not be described herein.

In some examples, as illustrated by Fig. 1, the first structure 111, the second structure 112, and the third structure 113 are all connecting rods. Thus, the articulated assembly 100 can be used for mechanical joints. For example, it may be the joint of a robot.

Embodiments of the present disclosure further provide a robot. The robot includes any of the mechanical joints described above, so that the robot has beneficial effects corresponding to the beneficial effects of the mechanical joint, which will not be described herein.

The above is merely a specific embodiment of the present disclosure, but the scope of protection of the present disclosure is not limited thereto, and any person skilled in the art can easily conceive of changes or substitutions within the technical scope of the present disclosure, and should be covered within the scope of protection of the present disclosure as defined by the appended claims.

## Claims

1. An articulated assembly (100), comprising a plurality of structural members (110), wherein the plurality of structural members (110) comprise a first structural member (111), a second structural member (112), and a third structural member (113),
the articulated assembly (100) further comprises a plurality of bearings (120), the plurality of bearings (120) comprise a first bearing (121) and a second bearing (122), an outer ring (120a) of the first bearing (121) is matched with a bearing housing (ST1) of the first structural member (111), and an outer ring (120a) of the second bearing (122) is matched with a bearing housing (ST2) of the second structural member (112),
the first bearing (121) and the second bearing (122) are coaxially arranged and arranged along an axial direction (X) of the first bearing (121), along the axial direction (X), the bearing housing (ST2) of the second structural member (112) is located between the bearing housing (ST1) of the first structural member (111) and the third structural member (113),
the articulated assembly (100) further comprises a first receiving ring (130) and a second receiving ring (140), along the axial direction (X), the first receiving ring (130) is located between the first bearing (121) and the second bearing (122), and two end surfaces of the first receiving ring (130) are respectively in abutment with an inner ring (120b) of the first bearing (121) and an inner ring (120b) of the second bearing (122); along the axial direction (X), the second receiving ring (140) is located between the second bearing (122) and the third structural member (113), and two end surfaces of the second receiving ring (140) are respectively in abutment with the inner ring (120b) of the second bearing (122) and the third structural member (113),
the articulated assembly (100) further comprises a fastening assembly (150), along the axial direction (X), the fastening assembly (150) fastens the inner ring (120b) of the first bearing (121), the first receiving ring (130), the inner ring (120b) of the second bearing (122), the second receiving ring (140), and the third structural member (113) together, **characterized in that**
the plurality of bearings (120) comprise two first bearings (121) and two second bearings (122), outer rings (120a) of the two first bearings (121) are matched with two bearing housings (ST1) of the first structural member (111), and outer rings (120a) of the two second bearings (122) are matched with two bearing housings (ST2) of the second structural member (112),
along the axial direction (X), the two first bearings (121) are respectively located at two sides of the third structural member (113), the two second bearings (122) are respectively located at two sides of the third structural member (113), and each of the two first bearings (121) is located at a side of the second bearing (122) away from the third structural member (113),
the articulated assembly (100) comprises two first receiving rings (130), the two first receiving rings (130) are respectively located at two sides of the third structural member (113), and each of the two first receiving rings (130) is located between the first bearing (121) and the second bearing (122).

2. The articulated assembly (100) according to claim 1, wherein the third structural member (113) comprises a through hole (1130), and the fastening assembly (150) comprises a penetration portion (151), the penetration portion (151) of the fastening assembly (150) passes through the first bearing (121), the first receiving ring (130), the second bearing (122), the second receiving ring (140), and the through hole (1130) of the third structural member (113), the penetration portion (151) is in clearance fit with each of the first receiving ring (130), the second bearing (122), the second receiving ring (140), and the through hole (1130) of the third structural member (113) in a radial direction (Y) perpendicular to the axial direction (X).

3. The articulated assembly (100) according to claim 2, wherein a portion of the first receiving ring (130) is located within the bearing housing (ST1) of the first structural member (111), and a portion of the second receiving ring (140) is located within the bearing housing (ST2) of the second structural member (112),
the first receiving ring (130) is in clearance fit with the bearing housing (ST1) of the first structural member (111) in the radial direction (Y), and the second receiving ring (140) is in clearance fit with the bearing housing (ST2) of the second structural member (112) in the radial direction (Y).

4. The articulated assembly (100) according to claim 3, wherein the bearing housing (ST1) of the first structural member (111) comprises a first through hole (161) coaxial with the first bearing (121), the first through hole (161) comprises a first sub-through hole (1611) and a second sub-through hole (1612), the first bearing (121) is located in the first sub-through hole (1611), the portion of the first receiving ring (130) is located in the second sub-through hole (1612), a diameter of an outer side surface of the first receiving ring (130) is smaller than a diameter of the second sub-through hole (1612),
the bearing housing (ST2) of the second structural member (112) comprises a second through hole (162) coaxial with the second bearing (122), the second through hole (162) comprises a third sub-through hole (1623) and a fourth sub-through hole (1624), the second bearing (122) is located in the third sub-through hole (1623), the portion of the second receiving ring (140) is located in the fourth sub-through hole (1624), and a diameter of an outer side surface of the second receiving ring (140) is smaller than a diameter of the fourth sub-through hole (1624).

5. The articulated assembly (100) according to any one of claims 1-4, wherein the penetration portion (151) of the fastening assembly (150) comprises a first fastening element (1511) and a second fastening element (1512) connectable to each other in the axial direction (X), the first fastening element (1511) is fixedly connected to the second fastening element (1512) through the first bearing (121), the first receiving ring (130), the second bearing (122), the second receiving ring (140), and the through hole (1130) of the third structural member (113).

6. The articulated assembly (100) according to claim 5, wherein the second receiving ring (140) comprises a ring portion (141) and a seat cover (142), the ring portion (141) is surrounding the penetration portion (151), the seat cover (142) is connected to and within the ring portion (141), and the seat cover (142) and the ring portion (141) are both in abutment with the third structural member (113) in the axial direction (X),
preferably, the first fastening element (1511) comprises a first abutment surface (S1) perpendicular to the axial direction (X), along the axial direction (X), the seat cover (142) of the second receiving ring (140) is located between the first abutment surface (S1) and the third structural member (113), the first abutment surface (S1) of the first fastening element (1511) is in abutment with the seat cover (142) of the second receiving ring (140).

7. The articulated assembly (100) according to claim 6, wherein the articulated assembly (100) comprises two second receiving rings (140), the two second receiving rings (140) are respectively located at two sides of the third structural member (113), each of the two second receiving rings (140) is located between the second bearing (122) and the third structural member (113),
the first fastening element (1511) passes through the first bearing (121), the first receiving ring (130), the second bearing (122), the second receiving ring (140), and the through hole (1130) of the third structural member (113) that are located at a same side of the third structural member (113), and the second fastening element (1512) passes through the first bearing (121), the first receiving ring (130), the second bearing (122), and at least a portion of the second receiving ring (140) that are located at another side of the third structural member (113),

8. The articulated assembly (100) according to claim 7, wherein the first fastening element (1511) comprises the first abutment surface (S1) perpendicular to the axial direction (X), the second fastening element (1512) comprises a second abutment surface (S2) perpendicular to the axial direction (X), the first abutment surface (S1) of the first fastening element (1511) is in abutment with the seat cover (142) of the second receiving ring (140) located at a same side as the first fastening element (1511) and causes the seat cover (142) to be in abutment with the third structural member (113), and the second abutment surface (S2) of the second fastening element (1512) is in abutment with the seat cover (142) of the second receiving ring (140) located at a same side as the second fastening element (1512) and causes the seat cover (142) to be in abutment with the third structural member (113).

9. The articulated assembly (100) according to claim 1, wherein the articulated assembly (100) comprises one second receiving ring (140), the first fastening element (1511) passes through the first bearing (121), the first receiving ring (130), the second bearing (122), the second receiving ring (140), and the through hole (1130) of the third structural member (113) that are at a same side of the third structural member (113), the second fastening element (1512) passes through the first bearing (121), the first receiving ring (130), and the second bearing (122) that are at another side of the third structural member (113), an end surface of the second fastening element (1512) close to the third structural member (113) is in abutment with the third structural member (113).

10. The articulated assembly (100) according to claim 2, wherein the fastening assembly (150) further comprises a fastening end cap (152), the fastening end cap (152) is screwed at an end portion of the penetration portion (151) in the axial direction (X),
the fastening end cap (152) comprises a cap-shaped portion (1520), the cap-shaped portion (1520) is in abutment with the inner ring (120b) of the first bearing (121) in the axial direction (X), and the cap-shaped portion (1520) is in clearance fit with the end portion of the penetration portion (151) in the axial direction (X).

11. The articulated assembly (100) according to claim 6, wherein a thickness of the first receiving ring (130) in the radial direction (Y) is greater than a thickness of the inner ring (120b) of the first bearing (121) in the radial direction (Y) and greater than a thickness of the inner ring (120b) of the second bearing (122) in the radial direction (Y),
a thickness of the ring portion (141) of the second receiving ring (140) in the radial direction (Y) is larger than the thickness of the inner ring (120b) of the second bearing (122) in the radial direction (Y).

12. The articulated assembly (100) according to any one of claims 1-4, wherein the first bearing (121) is arranged at a side of the bearing housing (ST1) of the first structural member (111) away from the bearing housing (ST2) of the second structural member (112), and the second bearing (122) is arranged at a side of the bearing housing (ST2) of the second structural member (112) facing the bearing housing (ST1) of the first structural member (111),
preferably, along the axial direction (X), the end surface of the first receiving ring (130) that abuts against the inner ring (120b) of the second bearing (122) protrudes from an end surface of the first structural member (111) facing the second structural member (112), and/or along the axial direction (X), the end surface of the second receiving ring (140) that abuts against the third structural member (113) protrudes from an end surface of the second structural member (112) facing the third structural member (113).

13. The articulated assembly (100) according to any one of claims 1-4, wherein one of the end surface of the second receiving ring (140) close to the third structural member (113) and a surface of the third structural member (113) close to the second receiving ring (140) is provided with a protruding structure and the other is provided with a groove structure, and when the end surface of the second receiving ring (140) close to the third structural member (113) is in abutment with the third structural member (113), the protruding structure is located in the groove structure,
preferably, the outer ring (120a) of the first bearing (121) is in interference fit with the bearing housing (ST1) of the first structural member (111), and the outer ring (120a) of the second bearing (122) is in interference fit with the bearing housing (ST2) of the second structural member (112).

14. A mechanical joint, comprising the articulated assembly (100) according to any one of claims 1-13,
preferably, the first structural member (111), the second structural member (112), and the third structural member (113) are all connecting rods.

15. A robot, comprising the mechanical joint according to claim 14.

## Patentansprüche

1. Gelenkanordnung (100), die eine Vielzahl von Strukturelementen (110) umfasst, wobei die Vielzahl von Strukturelementen (110) ein erstes Strukturelement (111), ein zweites Strukturelement (112) sowie ein drittes Strukturelement (113) umfasst,
wobei die Gelenkanordnung (100) des Weiteren eine Vielzahl von Lagern (120) umfasst, die Vielzahl von Lagern (120) ein erstes Lager (121) und ein zweites Lager (122) umfasst, ein Außenring (120a) des ersten Lagers (121) an ein Lagergehäuse (ST1) des ersten Strukturelementes (111) angepasst ist und ein Außenring (120a) des zweiten Lagers (122) an ein Lagergehäuse (ST2) des zweiten Strukturelementes (112) angepasst ist,
wobei das erste Lager (121) und das zweite Lager (122) koaxial angeordnet und in einer axialen Richtung (X) des ersten Lagers (121) angeordnet sind, sich das Lagergehäuse (ST2) des zweiten Strukturelementes (112) in der axialen Richtung (X) zwischen dem Lagergehäuse (ST1) des ersten Strukturelementes (111) und dem dritten Strukturelement (113) befindet,
wobei die Gelenkanordnung (100) des Weiteren einen ersten Aufnahmering (130) sowie einen zweiten Aufnahmering (140) umfasst, sich der erste Aufnahmering (130) in der axialen Richtung (X) zwischen dem ersten Lager (121) und dem zweiten Lager (122) befindet und zwei Endflächen des ersten Aufnahmerings (130) jeweils an einem Innenring (120b) des ersten Lagers (121) sowie einem Innenring (120b) des zweiten Lagers (122) anliegen; sich der zweite Aufnahmering (140) in der axialen Richtung (X) zwischen dem zweiten Lager (122) und dem dritten Strukturelement (113) befindet und zwei Endflächen des zweiten Aufnahmerings (140) jeweils an dem Innenring (120b) des zweiten Lagers (122) und dem dritten Strukturelement (113) anliegen,
wobei die Gelenkanordnung (100) des Weiteren eine Befestigungsanordnung (150) umfasst, die Befestigungsanordnung (150) in der axialen Richtung (X) den Innenring (120b) des ersten Lagers (121), den ersten Aufnahmering (130), den Innenring (120b) des zweiten Lagers (122), den zweiten Aufnahmering (140) und das dritte Strukturelement (113) aneinander befestigt,
**dadurch gekennzeichnet, dass**
die Vielzahl von Lagern (120) zwei erste Lager (121) sowie zwei zweite Lager (122) umfasst, wobei Außenringe (120a) der zwei ersten Lager (121) an zwei Lagergehäuse (ST1) des ersten Strukturelementes (111) angepasst sind, und Außenringe (120a) der zwei zweiten Lager (122) an zwei Lagergehäuse (ST2) des zweiten Strukturelementes (112) angepasst sind,
wobei in der axialen Richtung (X) sich die zwei ersten Lager (121) jeweils an zwei Seiten des dritten Strukturelementes (113) befinden, sich die zwei zweiten Lager (122) jeweils an zwei Seiten des dritten Strukturelementes (113) befinden und sich jedes der zwei ersten Lager (121) an einer von dem dritten Strukturelement (113) entfernten Seite des zweiten Lagers (122) befindet,
wobei die Gelenkanordnung (100) zwei erste Aufnahmeringe (130) umfasst, sich die zwei ersten Aufnahmeringe (130) jeweils an zwei Seiten des dritten Strukturelementes (113) befinden und sich jeder der zwei ersten Aufnahmeringe (130) zwischen dem ersten Lager (121) und dem zweiten Lager (122) befindet.

2. Gelenkanordnung (100) nach Anspruch 1, wobei das dritte Strukturelement (113) eine Durchgangsbohrung (1130) umfasst und die Befestigungsanordnung (150) einen Durchdringungsabschnitt (151) umfasst, der Durchdringungsabschnitt (151) der Befestigungsanordnung (150) durch das erste Lager (121), den ersten Aufnahmering (130), das zweite Lager (122), den zweiten Aufnahmering (140) sowie die Durchgangsbohrung (1130) des dritten Strukturelementes (113) hindurch verläuft, der Durchdringungsabschnitt (151) in einer radialen Richtung (Y) senkrecht zu der axialen Richtung (X) jeweils mit dem ersten Aufnahmering (130), dem zweiten Lager (122), dem zweiten Aufnahmering (140) und der Durchgangsbohrung (1130) des dritten Strukturelementes (113) in Spielpassung ist.

3. Gelenkanordnung (100) nach Anspruch 2, wobei sich ein Abschnitt des ersten Aufnahmerings (130) im Inneren des Lagergehäuses (ST1) des ersten Strukturelementes (111) befindet und sich ein Abschnitt des zweiten Aufnahmerings (140) im Inneren des Lagergehäuses (ST2) des zweiten Strukturelementes (112) befindet,
der erste Aufnahmering (130) in der radialen Richtung (Y) in Spielpassung mit dem Lagergehäuse (ST1) des ersten Strukturelementes (111) ist und der zweite Aufnahmering (140) in der radialen Richtung (Y) in Spielpassung mit dem Lagergehäuse (ST2) des zweiten Strukturelementes (112) ist.

4. Gelenkanordnung (100) nach Anspruch 3, wobei das Lagergehäuse (ST1) des ersten Strukturelementes (111) eine erste Durchgangsbohrung (161) koaxial zu dem ersten Lager (121) umfasst, die erste Durchgangsbohrung (161) eine erste Teildurchgangsbohrung (1611) sowie eine zweite Teildurchgangsbohrung (1612) umfasst, sich das erste Lager (121) in der ersten Teildurchgangsbohrung (1611) befindet, sich der Abschnitt des ersten Aufnahmerings (130) in der zweiten Teildurchgangsbohrung (1612) befindet, ein Durchmesser einer Außenseitenfläche des ersten Aufnahmerings (130) kleiner ist als ein Durchmesser der zweiten Teildurchgangsbohrung (1612),
das Lagergehäuse (ST2) des zweiten Strukturelementes (112) eine zweite Durchgangsbohrung (162) koaxial zu dem zweiten Lager (122) umfasst, die zweite Durchgangsbohrung (162) eine dritte Teildurchgangsbohrung (1623) sowie eine vierte Teildurchgangsbohrung (1624) umfasst, sich das zweite Lager (122) in der dritten Teildurchgangsbohrung (1623) befindet, sich der Abschnitt des zweiten Aufnahmerings (140) in der vierten Teildurchgangsbohrung (1624) befindet, und ein Durchmesser einer Außenseitenfläche des zweiten Aufnahmerings (140) kleiner ist als ein Durchmesser der vierten Teildurchgangsbohrung (1624).

5. Gelenkanordnung (100) nach einem der Ansprüche 1 - 4, wobei der Durchdringungsabschnitt (151) der Befestigungsanordnung (150) ein erstes Befestigungselement (1511) sowie ein zweites Befestigungselement (1512) umfasst, die in der axialen Richtung (X) miteinander verbunden werden können, das erste Befestigungselement (1511) über das erste Lager (121), den ersten Aufnahmering (130), das zweite Lager (122), den zweiten Aufnahmering (140) und das Durchgangsbohrung (1130) des dritten Strukturelementes (113) fest mit dem zweiten Befestigungselement (1512) verbunden ist.

6. Gelenkanordnung (100) nach Anspruch 5, wobei der zweite Aufnahmering (140) einen Ringabschnitt (141) sowie eine Sitzabdeckung (142) umfasst, der Ringabschnitt (141) den Durchdringungsabschnitt (151) umgibt, die Sitzabdeckung (142) mit dem Ringabschnitt (141) verbunden und in dessen Innerem angeordnet ist, und sowohl die Sitzabdeckung (142) als auch der Ringabschnitt (141) in der axialen Richtung (X) an dem dritten Strukturelement (113) anliegen,
vorzugsweise das erste Befestigungselement (1511) eine erste Anlagefläche (S1) senkrecht zu der axialen Richtung (X) aufweist, sich die Sitzabdeckung (142) des zweiten Aufnahmerings (140)in der axialen Richtung (X) zwischen der ersten Anlagefläche (S1) und dem dritten Strukturelement (113) befindet und die erste Anlagefläche (S1) des ersten Befestigungselementes (1511) an der Sitzabdeckung (142) des zweiten Aufnahmerings (140) anliegt.

7. Gelenkanordnung (100) nach Anspruch 6, wobei die Gelenkanordnung (100) zwei zweite Aufnahmeringe (140) umfasst, die zwei zweiten Aufnahmeringe (140) sich jeweils an zwei Seiten des dritten Strukturelementes (113) befinden, sich jeder der zwei zweiten Aufnahmeringe (140) zwischen dem zweiten Lager (122) und dem dritten Strukturelement (113) befindet,
das erste Befestigungselement (1511) durch das erste Lager (121), den ersten Aufnahmering (130), das zweite Lager (122), den zweiten Aufnahmering (140) und die Durchgangsbohrung (1130) des dritten Strukturelementes (113) hindurch verläuft, die sich an einer gleichen Seite des dritten Strukturelementes (113) befinden, und das zweite Befestigungselement (1512) durch das erste Lager (121), den ersten Aufnahmering (130), das zweite Lager (122) und wenigstens einen Abschnitt des zweiten Aufnahmerings (140) hindurch verläuft, die sich an einer anderen Seite des dritten Strukturelementes (113) befinden.

8. Gelenkanordnung (100) nach Anspruch 7, wobei das erste Befestigungselement (1511) die erste Anlagefläche (S1) senkrecht zu der axialen Richtung (X) umfasst, das zweite Befestigungselement (1512) eine zweite Anlagefläche (S2) senkrecht zu der axialen Richtung (X) umfasst, die erste Anlagefläche (S1) des ersten Befestigungselementes (1511) an der Sitzabdeckung (142) des zweiten Aufnahmerings (140) anliegt, die sich an einer gleichen Seite befindet wie das erste Befestigungselement (1511), und bewirkt, dass die Sitzabdeckung (142) an dem dritten Strukturelement (113) anliegt, und die zweite Anlagefläche (S2) des zweiten Befestigungselementes (1512) an der Sitzabdeckung (142) des zweiten Aufnahmerings (140) anliegt, die sich an einer gleichen Seite befindet wie das zweite Befestigungselement (1512), und bewirkt, dass die Sitzabdeckung (142) an dem dritten Strukturelement (113) anliegt.

9. Gelenkanordnung (100) nach Anspruch 1, wobei die Gelenkanordnung (100) einen zweiten Aufnahmering (140) umfasst, das erste Befestigungselement (1511) durch das erste Lager (121), den ersten Aufnahmering (130), das zweite Lager (122), den zweiten Aufnahmering (140) und die Durchgangsbohrung (1130) des dritten Strukturelementes(113) hindurch verläuft, die an einer gleichen Seite des dritten Strukturelementes (113) liegen, das zweite Befestigungselement (1512) durch das erste Lager (121), den ersten Aufnahmering (130) und das zweite Lager (122) hindurchtritt, die an einer anderen Seite des dritten Strukturelementes (113) liegen, und eine dem dritten Strukturelement (113) nahe liegende Endfläche des zweiten Befestigungselementes (1512) an dem dritten Strukturelement (113) anliegt.

10. Gelenkanordnung (100) nach Anspruch 2, wobei die Befestigungsanordnung (150) des Weiteren eine Befestigungs-Endkappe (152) umfasst, die Befestigungs-Endkappe (152) an einem Endabschnitt des Durchdringungsabschnitts (151) in der axialen Richtung (X) angeschraubt ist,
die Befestigungs-Endkappe (152) einen kappenförmigen Abschnitt (1520) umfasst, der kappenförmige Abschnitt (1520) in der axialen Richtung (X) an dem Innenring (120b) des ersten Lagers (121) anliegt, und der kappenförmige Abschnitt (1520) in der axialen Richtung (X) mit dem Endabschnitt des Durchdringungsabschnitts (151) in Spielpassung ist.

11. Gelenkanordnung (100) nach Anspruch 6, wobei eine Dicke des ersten Aufnahmerings (130) in der radialen Richtung (Y) größer ist als eine Dicke des Innenrings (120b) in der radialen Richtung (Y) und größer als eine Dicke des Innenrings (120b) des zweiten Lagers (122) in der radialen Richtung (Y),
eine Dicke des Ringabschnitts (141) des zweiten Aufnahmerings (140) in der radialen Richtung (Y) größer ist als die Dicke des Innenrings (120b) des zweiten Lagers (122) in der radialen Richtung (Y).

12. Gelenkanordnung (100) nach einem der Ansprüche 1 - 4, wobei das erste Lager (121) an einer von dem Lagergehäuse (ST2) des zweiten Strukturelementes (112) entfernten Seite des Lagergehäuses (ST1) des ersten Strukturelementes (111) angeordnet ist, und das zweite Lager (122) an einer dem Lagergehäuse (ST1) des ersten Strukturelementes (111) zugewandten Seite des Lagergehäuses (ST2) des zweiten Strukturelementes (112) angeordnet ist,
vorzugsweise die Endfläche des ersten Aufnahmerings (130), die an dem Innenring (120b) des zweiten Lagers (122) anliegt, in der axialen Richtung (X) von einer dem zweiten Bauteil (112) zugewandten Endfläche des ersten Bauteils (111) vorsteht, und/oder die Endfläche des zweiten Aufnahmerings (140), die an dem dritten Bauteil (113) anliegt, in der axialen Richtung (X) von einer dem dritten Bauteil (113) zugewandten Endfläche des zweiten Bauteils (112) vorsteht.

13. Gelenkanordnung (100) nach einem der Ansprüche 1 - 4, wobei eine von der dem dritten Bauteil (113) nahe liegenden Endfläche des zweiten Aufnahmerings (140) und einer dem zweiten Aufnahmering (140) nahe liegenden Fläche des dritten Strukturelementes (113) mit einer vorstehenden Struktur versehen ist und die andere Fläche mit einer Nutstruktur versehen ist, und wenn die dem dritten Strukturelement (113) nahe liegende Endfläche des zweiten Aufnahmerings (140) an dem dritten Strukturelement (113) anliegt, sich die vorstehende Struktur in der Nutstruktur befindet,
vorzugsweise der Außenring (120a) des ersten Lagers (121) in Presspassung mit dem Lagergehäuse (ST1) des ersten Strukturelementes (111) ist und der Außenring (120a) des zweiten Lagers (122) in Presspassung mit dem Lagergehäuse (ST2) des zweiten Strukturelementes (112) ist.

14. Mechanisches Gelenk, das die Gelenkanordnung (100) nach einem der Ansprüche 1 - 13 umfasst,
wobei vorzugsweise das erste Strukturelement (111), das zweite Strukturelement (112) und das dritte Strukturelement (113) jeweils Koppelstangen sind.

15. Roboter, der das mechanische Gelenk nach Anspruch 14 umfasst.

## Revendications

1. Ensemble articulé (100), comprenant une pluralité d'éléments structurels (110), dans lequel la pluralité d'éléments structurels (110) comprend un premier élément structurel (111), un deuxième élément structurel (112) et un troisième élément structurel (113),
l'ensemble articulé (100) comprend en outre une pluralité de paliers (120), la pluralité de paliers (120) comprend un premier palier (121) et un second palier (122), une bague extérieure (120a) du premier palier (121) est associée à un logement de palier (ST1) du premier élément structurel (111), et une bague extérieure (120a) du second palier (122) est associée à un logement de palier (ST2) du deuxième élément structurel (112),
le premier palier (121) et le second palier (122) sont disposés coaxialement et disposés le long d'une direction axiale (X) du premier palier (121), le long de la direction axiale (X), le logement de palier (ST2) du deuxième élément structurel (112) est situé entre le logement de palier (ST1) du premier élément structurel (111) et du troisième élément structurel (113),
l'ensemble articulé (100) comprend en outre une première bague de réception (130) et une seconde bague de réception(140), le long de la direction axiale (X), la première bague de réception (130) est située entre le premier palier (121) et le second palier (122), et deux surfaces d'extrémité de la première bague de réception (130) sont respectivement en butée avec une bague intérieure (120b) du premier palier (121) et une bague intérieure (120b) du second palier (122) ; le long de la direction axiale (X), la seconde bague de réception (140) est située entre le second palier (122) et le troisième élément structurel (113), et deux surfaces d extrémité de la seconde bague de réception (140) sont respectivement en butée avec la bague intérieure (120b) du second palier (122) et le troisième élément structurel (113),
l'ensemble articulé (100) comprend en outre un ensemble de fixation (150), le long de la direction axiale (X), l'ensemble de fixation (150) fixe ensemble la bague intérieure (120b) du premier palier (121), la première bague de réception (130), la bague intérieure (120b) du second palier (122), la seconde bague de réception (140) et le troisième élément structurel (113),
caractérisé en ce
la pluralité de paliers (120) comprend deux premiers paliers (121) et deux seconds paliers (122), des bagues extérieures (120a) des deux premiers paliers (121) sont associées à deux logements de palier (ST1) du premier élément structurel (111), et des bagues extérieures (120a) des deux seconds paliers (122) sont associées à deux logements de palier (ST2) du deuxième élément structurel (112),
le long de la direction axiale (X), les deux premiers paliers (121) sont respectivement situés au niveau de deux côtés du troisième élément structurel (113), les deux seconds paliers (122) sont respectivement situés au niveau de deux côtés du troisième élément structurel (113), et chacun des deux premiers paliers (121) est situé au niveau d'un côté du second palier (122) à l'écart du troisième élément structurel (113),
l'ensemble articulé (100) comprend deux premières bagues de réception (130), les deux premières bagues de réception (130) sont respectivement situées au niveau de deux côtés du troisième élément structurel (113), et chacune des deux premières bagues de réception (130) est située entre le premier palier (121) et le second palier (122).

2. Ensemble articulé (100) selon la revendication 1, dans lequel le troisième élément structurel (113) comprend un trou traversant (1130), et l'ensemble de fixation (150) comprend une partie de pénétration (151), la partie de pénétration (151) de l'ensemble de fixation (150) passe à travers le premier palier (121), la première bague de réception (130), le second palier (122), la seconde bague de réception (140) et le trou traversant (1130) du troisième élément structurel (113), la partie de pénétration (151) est en ajustement avec jeu avec chacun de la première bague de réception (130), du second palier (122), de la seconde bague de réception (140) et du trou traversant (1130) du troisième élément structurel (113) dans une direction radiale (Y) perpendiculaire à la direction axiale (X).

3. Ensemble articulé (100) selon la revendication 2, dans lequel une partie de la première bague de réception (130) est située dans le logement de palier (ST1) du premier élément structurel (111), et une partie de la seconde bague de réception (140) est située dans le logement de support (ST2) du deuxième élément structurel (112), la première bague de réception (130) est en ajustement avec jeu avec le logement de palier (ST1) du premier élément structurel (111) dans la direction radiale (Y), et la seconde bague de réception (140) est en ajustement avec jeu avec le logement de palier (ST2) du deuxième élément structurel (112) dans la direction radiale (Y).

4. Ensemble articulé (100) selon la revendication 3, dans lequel le logement de palier (ST1) du premier élément structurel (111) comprend un premier trou traversant (161) coaxial avec le premier palier (121), le premier trou traversant (161) comprend un premier sous-trou traversant (1611) et un deuxième sous-trou traversant (1612), le premier palier (121) est situé dans le premier sous-trou traversant (1611), la partie de la première bague de réception (130) est située dans le deuxième sous-trou traversant (1612), un diamètre d une surface latérale extérieure de la première bague de réception (130) est inférieur à un diamètre du deuxième sous-trou traversant (1612), le logement de palier (ST2) du deuxième élément structurel (112) comprend un second trou traversant (162) coaxial avec le second palier (122), le second trou traversant (162) comprend un troisième sous-trou traversant (1623) et un quatrième sous-trou traversant (1624), le second palier (122) est situé dans le troisième sous-trou traversant (1623), la partie de la seconde bague de réception (140) est située dans le quatrième sous-trou traversant (1624), et un diamètre d'une surface latérale extérieure de la seconde bague de réception (140) est inférieur à un diamètre du quatrième sous-trou traversant (1624).

5. Ensemble articulé (100) selon l'une quelconque des revendications 1 à 4, dans lequel la partie de pénétration (151) de l ensemble de fixation (150) comprend un premier élément de fixation (1511) et un second élément de fixation (1512) pouvant être reliés entre eux dans la direction axiale (X), le premier élément de fixation (1511) est fixement relié au second élément de fixation (1512) via le premier palier (121), la première bague de réception (130), le second palier (122), la seconde bague de réception (140) et le trou traversant (1130) du troisième élément structurel (113).

6. Ensemble articulé (100) selon la revendication 5, dans lequel la seconde bague de réception (140) comprend une partie bague (141) et un couvercle de siège (142), la partie bague (141) entoure la partie de pénétration (151), le couvercle de siège (142) est relié à la partie bague (141), et est à l'intérieur de celle-ci, et le couvercle de siège (142) et la partie bague (141) sont tous deux en butée avec le troisième élément structurel (113) dans la direction axiale (X),
de préférence, le premier élément de fixation (1511) comprend une première surface de butée (S1) perpendiculaire à la direction axiale (X), le long de la direction axiale (X), le couvercle de siège (142) de la seconde bague de réception (140) est situé entre la première surface de butée (S1) et le troisième élément structurel (113), la première surface de butée (S1) du premier élément de fixation (1511) est en butée avec le couvercle de siège (142) de la seconde bague de réception (140).

7. Ensemble articulé (100) selon la revendication 6, dans lequel l'ensemble articulé (100) comprend deux secondes bagues de réception (140), les deux secondes bagues de réception (140) sont respectivement situées au niveau de deux côtés du troisième élément structurel (113), chacune des deux secondes bagues de réception (140) est située entre le second palier (122) et le troisième élément structurel (113),
le premier élément de fixation (1511) passe à travers le premier palier (121), la première bague de réception (130), le second palier (122), la seconde bague de réception (140) et le trou traversant (1130) du troisième élément structurel (113), qui sont situés au niveau d'un même côté du troisième élément structurel (113), et le second élément de fixation (1512) passe à travers le premier palier (121), la première bague de réception (130), le second palier (122), et au moins une partie de la seconde bague de réception (140) qui sont situés au niveau d un autre côté du troisième élément structurel (113).

8. Ensemble articulé (100) selon la revendication 7, dans lequel le premier élément de fixation (1511) comprend la première surface de butée (S1) perpendiculaire à la direction axiale (X), le second élément de fixation (1512) comprend une seconde surface de butée (S2) perpendiculaire à la direction axiale (X), la première surface de butée (S1) du premier élément de fixation (1511) est en butée avec le couvercle de siège (142) de la seconde bague de réception (140) située au niveau d'un même côté que le premier élément de fixation (1511) et amène le couvercle de siège (142) à être en butée avec le troisième élément structurel (113), et la seconde surface de butée (S2) du second élément de fixation (1512) est en butée avec le couvercle de siège (142) de la seconde bague de réception (140) située au niveau d'un même côté que le second élément de fixation (1512) et amène le couvercle de siège (142) à être en butée avec le troisième élément structurel (113).

9. Ensemble articulé (100) selon la revendication 1, dans lequel l'ensemble articulé (100) comprend une seconde bague de réception (140), le premier élément de fixation (1511) passe à travers le premier palier (121), la première bague de réception (130), le second palier (122), la seconde bague de réception (140) et le trou traversant (1130) du troisième élément structurel (113) qui sont au niveau d'un même côté du troisième élément structurel (113), le second élément de fixation (1512) passe à travers le premier palier (121), la première bague de réception (130) et le second palier (122) qui sont au niveau d'un autre côté du troisième élément structurel (113),
une surface d'extrémité du second élément de fixation (1512) proche du troisième élément structurel (113) est en butée avec le troisième élément structurel (113).

10. Ensemble articulé (100) selon la revendication 2, dans lequel l'ensemble de fixation (150) comprend en outre un capuchon d extrémité de fixation (152), le capuchon d'extrémité de fixation (152) est vissé au niveau d'une partie d'extrémité de la partie de pénétration (151) dans la direction axiale (X),
le capuchon d'extrémité de fixation (152) comprend une partie en forme de capuchon (1520), la partie en forme de capuchon (1520) est en butée avec la bague intérieure (120b) du premier palier (121) dans la direction axiale (X), et la partie en forme de capuchon (1520) est en ajustement avec jeu avec la partie d'extrémité de la partie de pénétration (151) dans la direction axiale (X).

11. Ensemble articulé (100) selon la revendication 6, dans lequel une épaisseur de la première bague de réception (130) dans la direction radiale (Y) est supérieure à une épaisseur de la bague intérieure (120b) du premier palier (121) dans la direction radiale (Y) et supérieure à une épaisseur de la bague intérieure (120b) du second palier (122) dans la direction radiale (Y),
une épaisseur de la partie bague (141) de la seconde bague de réception (140) dans la direction radiale (Y) est supérieure à l'épaisseur de la bague intérieure (120b) du second palier (122) dans la direction radiale (Y).

12. Ensemble articulé (100) selon l'une quelconque des revendications 1 à 4, dans lequel le premier palier (121) est disposé au niveau d'un côté du logement de palier (ST1) du premier élément structurel (111) à l'écart du logement du palier (ST2) du deuxième élément structurel (112), et le second palier (122) est disposé au niveau d'un côté du logement de palier (ST2) du deuxième élément structurel (112) faisant face au logement de palier (ST1) du premier élément structurel (111),
de préférence, le long de la direction axiale (X), la surface d'extrémité de la première bague de réception (130) qui est en butée contre la bague intérieure (120b) du second palier (122) fait saillie depuis une surface d'extrémité du premier élément structurel (111) faisant face au deuxième élément structurel (112), et/ou le long de la direction axiale (X), la surface d'extrémité de la seconde bague de réception (140) qui est en butée contre le troisième élément structurel (113) fait saillie depuis une surface d'extrémité du deuxième élément structurel (112) faisant face au troisième élément structurel (113).

13. Ensemble articulé (100) selon l'une quelconque des revendications 1 à 4, dans lequel l une de la surface d'extrémité de la seconde bague de réception (140) proche du troisième élément structurel (113) et d'une surface du troisième élément structurel (113) proche de la seconde bague de réception (140) est dotée d'une structure en saillie et l'autre est dotée d une structure de rainure, et lorsque la surface d extrémité de la seconde bague de réception (140) proche du troisième élément structurel (113) est en butée avec le troisième élément structurel (113), la structure en saillie est située dans la structure de rainure,
de préférence, la bague extérieure (120a) du premier palier (121) est en ajustement serré avec le logement de palier (ST1) du premier élément structurel (111), et la bague extérieure (120a) du second palier (122) est en ajustement serré avec le logement de palier (ST2) du deuxième élément structurel (112).

14. Articulation mécanique, comprenant l'ensemble articulé (100) selon l une quelconque des revendications 1 à 13,
de préférence, le premier élément structurel (111), le deuxième élément structurel (112) et le troisième élément structurel (113) sont tous des bielles.

15. Robot, comprenant l'articulation mécanique selon la revendication 14.
